# FASCICULE DE BREVET EUROPEEN

(11) **EP 3 449 042 B1**
(45) Date de publication et mention de la délivrance du brevet: **23.10.2024**
(21) Numéro de dépôt: 17714480.5
(22) Date de dépôt: 31.03.2017
(51) Int. Cl.: C25B 1/04, C25B 11/075, C25B 11/077, C25B 11/093, C25D 3/38, C25D 5/48, C25D 7/00, H01M 4/88, H01M 4/90

(54) **ELECTRODE METAL / CHALCOGENURE METALLIQUE A HAUTE SURFACE SPECIFIQUE**
METALL/METALLCHALKOGENIDELEKTRODE MIT HOHER SPEZIFISCHER OBERFLÄCHE
METAL / METAL CHALCOGENIDE ELECTRODE WITH HIGH SPECIFIC SURFACE AREA

(30) Priorité: 27.04.2016 FR 1653753
(43) Date de publication de la demande: 06.03.2019
(73) Titulaire: Paris Sciences et Lettres, 75006 Paris (FR); Centre National de la Recherche Scientifique (CNRS), 75016 Paris (FR); SORBONNE UNIVERSITE, 75006 Paris (FR)
(72) Inventeur: FONTECAVE, Marc, 38330 Saint Ismier (FR); MOUGEL, Victor, 75012 Paris (FR); TRAN, Ngoc Huan, 92160 Antony (FR)
(74) Mandataire: Regimbeau
(86) Numéro de dépôt international: PCT/EP2017/057756
(87) Numéro de publication internationale: WO 2017/186454

(56) Documents cités:
- WO-A1-2015/170987
- KR-B1- 101 555 532
- US-A- 4 214 954
- US-A- 5 326 454
- KHURRAM S. JOYA ET AL: "Controlled Surface-Assembly of Nanoscale Leaf-Type Cu-Oxide Electrocatalyst for High Activity Water Oxidation", ACS CATALYSIS, vol. 6, no. 3, 11 February 2016 (2016-02-11), US, pages 1768 - 1771, XP055370865, ISSN: 2155-5435, DOI: 10.1021/acscatal.5b02950

## Description

La présente invention a pour objet une électrode de type métal / chalcogénure métallique (en particulier oxyde ou sulfure métallique, notamment oxyde ou sulfure de cuivre) à haute surface spécifique et son procédé de préparation, ainsi qu'un dispositif électrochimique la contenant et son utilisation notamment dans des procédés d'électrolyse et plus particulièrement d'oxydation de l'eau en dioxygène.

L'oxydation de l'eau en dioxygène (également appelé en anglais Oxygen Evolution Reaction, OER) est une réaction clé dans l'utilisation de l'eau comme une source d'électrons, notamment dans le contexte de dispositifs électrochimiques et photoélectrochimiques utilisés pour la réduction de composés tels par exemple le dioxyde de carbone ou l'eau elle-même. Cette réaction peut être schématisée comme suit :

2H₂O → O₂ + 4H⁺ + 4e⁻

Un système d'oxydation de l'eau efficace exige l'utilisation de systèmes catalytiques ayant une bonne stabilité et une bonne sélectivité mais surtout permettant la catalyse de la réaction à une densité de courant élevée et avec une faible surtension. Un tel système catalytique est particulièrement difficile à obtenir car la réaction implique la perte de quatre protons et quatre électrons. Un transfert d'électrons et de protons efficace est donc nécessaire.

Depuis les années 70, un grand nombre de systèmes catalytiques ont été proposés. La plupart des premiers systèmes consistaient en des complexes moléculaires ou des oxydes métalliques de l'iridium ou du ruthénium. Cependant, la rareté et le coût de ces métaux nobles limitent leur utilisation, notamment à l'échelle industrielle. Récemment, des efforts de recherche importants ont été consacrés au remplacement de ces métaux par des métaux plus abondants et moins chers pour permettre une application plus large de ces systèmes électrochimiques et photoélectrochimiques.

Des exemples de catalyseurs à base de Co, Ni, Fe ou Mn ont été proposés, que ce soit dans des systèmes catalytiques hétérogènes ou moléculaires (Nocera 2012). Si ces systèmes ont permis d'obtenir de bonnes activités catalytiques, en particulier avec des matériaux à base de cobalt, ils souffrent encore de densités de courant relativement faibles et de surtensions élevées (par exemple 0,1 mA/cm² à 320 mV de surtension a été observée pour un catalyseur phosphate de cobalt, voir Kanan et al. 2008) .

KR 101 555 532 décrit également une électrode pour l'électrolyse de l'eau à base de sulfure métallique, tel que le sulfure de molybdène, et d'un promoteur tel que le cobalt ou encore le nickel et le cuivre.

WO 2015/170987 décrit un matériau nanoparticulaire pour anode, en particulier pour l'oxydation de l'eau en dioxygène, constitué d'un oxyde métallique tel qu'un oxyde de cuivre déposé par anodisation électrolytique sur une surface de cuivre amorphe.

Khurram et al. (ACS Catal. 2016, 6, 1768-1771) décrit une électrode pour l'oxydation de l'eau comprenant, à titre d'électrocatalyseur, un oxyde de cuivre nanostructuré.

Récemment, des électrodes hétérogènes à base d'oxyde cuivrique (CuO) ou des électrodes à base d'oxyde cuivreux (CuzO) ont été développées pour l'oxydation de l'eau en dioxygène (Liu et al. 2016 (a) et (b)). Les résultats obtenus étaient comparables à ceux obtenus avec les systèmes à base de cobalt mais en utilisant un matériau beaucoup moins cher, le cuivre étant 5 fois moins cher que le cobalt. Toutefois, ces électrodes souffrent encore d'une surtension trop élevée pour la production de dioxygène.

Il existe donc encore un réel besoin de développer de nouveaux systèmes catalytiques capables de catalyser la réaction d'oxydation de l'eau avec une densité de courant élevée et une faible surtension.

La présente invention a donc pour premier objet une électrode comprenant un support électro-conducteur dont au moins une partie de la surface est recouverte par un dépôt d'un métal choisi dans le groupe constitué par le cuivre, le fer, le nickel, le zinc, le cobalt, le manganèse, le titane et un mélange de ceux-ci, et de préférence étant le cuivre, la surface dudit dépôt étant sous une forme oxydée, sulfurée, sélénée et/ou tellurée et le dépôt ayant une haute surface spécifique, et plus particulièrement une surface spécifique supérieure ou égale à 1 m²/g,
l'électrode étant susceptible d'être obtenue par un procédé de préparation comprenant les étapes successives suivantes :
   (i) électrodéposition de cuivre sur au moins une partie de la surface d'un support électro-conducteur afin de former un dépôt métallique dudit cuivre sur ladite au moins une partie de la surface du support électro-conducteur, et
   (ii) oxydation, sulfuration, sélénation et/ou telluration de la surface du dépôt métallique,
dans lequel l'étape (i) est réalisée selon les étapes successives suivantes :
   (a) immersion au moins partiellement du support électro-conducteur dans une solution aqueuse acide contenant des ions du cuivre à déposer, et
   (b) application d'un courant entre le support électro-conducteur et une seconde électrode.

Une telle électrode peut être utilisée pour catalyser la réaction d'oxydation de l'eau avec une densité de courant élevée et une faible surtension (typiquement 10 mA/cm² à moins de 350 mV de surtension). Une telle électrode donne ainsi de manière surprenante des résultats bien meilleurs que ceux obtenus dans l'art antérieur avec par exemple une électrode constituée d'un dépôt de phosphate de cobalt sur une électrode conductrice (1 mA/cm² à 410 mV de surtension - Kanan et al. 2008) ou encore à l'aide d'une électrode cuivre/oxyde de cuivre (1 mA/cm² à 485 mV - Du et al. 2015)

Par « électrode », on entend au sens de la présente invention un conducteur électronique capable de capter ou libérer des électrons. L'électrode qui libère des électrons est appelée anode. L'électrode qui capte des électrons est appelée cathode.

Par « support électro-conducteur », on entend au sens de la présente invention un support capable de conduire l'électricité.

Un tel support sera constitué, au moins en partie et de préférence totalement, par un matériau électro-conducteur qui pourra être un matériau composite constitué par plusieurs matériaux électro-conducteurs distincts. Le matériau électro-conducteur pourra être choisi notamment parmi un métal tel que le cuivre, l'acier, l'aluminium, le zinc ou encore le titane ; un oxyde métallique tel que l'oxyde de titane dopé au fluor (FTO - Fluorine-doped Tin Oxide en anglais) ou l'oxyde d'étain dopé à l'indium (ITO - Indium Tin Oxide en anglais) ; un sulfure métallique tel que le sulfure de cadmium ou le sulfure de zinc ; du carbone notamment sous forme de feutre de carbone, de graphite, de carbone vitreux, de diamant dopé au bore ; un semi-conducteur tel que du silicium ; et un mélange de ceux-ci.

Ce support pourra prendre toute forme adaptée pour une utilisation en tant qu'électrode, l'homme du métier étant à même de déterminer la forme et les dimensions d'un tel support selon l'utilisation envisagée.

La surface d'un tel support est recouverte au moins partiellement par le dépôt de métal. Avantageusement, au moins 5 %, en particulier au moins 20 %, notamment au moins 50 %, de préférence au moins 80 %, de la surface du support est recouvert par le dépôt de métal. Selon un mode de réalisation particulier, toute la surface du support est recouverte par le dépôt de métal.

Par « dépôt d'un métal », encore appelé « dépôt métallique », on entend au sens de la présente invention un dépôt d'un métal (qui peut être sous forme d'un mélange de métaux) au degré d'oxydation 0. Le dépôt de métal forme ainsi une couche métallique à la surface du support.

Le métal est avantageusement déposé sur le support par électrodéposition.

Le dépôt métallique a avantageusement une épaisseur comprise entre 10 µm et 2 mm, notamment comprise entre 50 µm et 0,5 mm, de préférence comprise entre 70 µm et 300 µm.

Une telle épaisseur peut être mesurée notamment par mesure d'une coupe d'échantillon par microscopie électronique à balayage (MEB).

Le dépôt métallique a une surface spécifique élevée.

Le dépôt métallique a plus particulièrement une surface spécifique supérieure ou égale à 1 m²/g, notamment supérieure ou égale à 2 m²/g, en particulier supérieure ou égale à 3 m²/g, par exemple supérieure ou égale à 5 m²/g ou encore supérieure ou égale à 10 m²/g. La surface spécifique pourra être comprise entre 1 m²/g et 500 m²/g, par exemple entre 1 m²/g et 200 m²/g, notamment comprise entre 2 m²/g et 100 m²/g, de préférence comprise entre 3 m²/g et 50 m²/g, par exemple comprise entre 5 m²/g et 50 m²/g ou encore comprise entre 10 m²/g et 50 m²/g. La valeur de surface spécifique est indiquée par gramme de dépôt métallique. Une telle surface spécifique est avantageusement déterminée par la méthode BET (Brunauer, Emmett et Teller). Cette méthode BET sera avantageusement appliquée à un échantillon de dépôt métallique obtenu par abrasion mécanique à l'aide d'une lame PVC (poly(chlorure de vinyle)) d'un 1 mm d'épaisseur dudit dépôt métallique présent sur le support électro-conducteur.

La surface spécifique peut être exprimée également en cm²/cm²_{géométrique}. Dans ce cas, la valeur de surface spécifique est indiquée par cm² d'électrode et peut être avantageusement supérieure ou égale à 5 cm²/cm²_{géométrique}, notamment supérieure ou égale à 10 cm²/cm²_{géométrique}, en particulier supérieure ou égale à 15 cm²/cm²_{géométrique}. La surface spécifique pourra être comprise entre 5 et 500 cm²/cm²_{géométrique}, par exemple entre 10 et 200 cm²/cm²_{géométrique}, notamment comprise entre 15 et 100 cm² /cm²_{géométrique}, de préférence comprise entre 15 et 50 cm²/cm²_{géométrique}. Une telle surface spécifique est avantageusement déterminée par mesure électrochimique (via l'équation de Randles-Sevcik), plus particulièrement selon les conditions décrites ci-après dans les considérations générales de la partie expérimentale.

Le dépôt métallique aura également avantageusement une structure poreuse.

Le dépôt métallique aura avantageusement une porosité avec une taille moyenne de pores comprise entre 10 µm et 500 µm, notamment entre 20 µm et 200 µm, de préférence entre 30 µm et 70 µm. La taille moyenne des pores peut être déterminée grâce à des clichés obtenus par microscopie électronique à balayage ou à effet tunnel, plus particulièrement selon les conditions décrites ci-après dans les considérations générales de la partie expérimentale.

Le métal déposé sur le support est choisi parmi, le cuivre, le fer, le nickel, le zinc, le cobalt, le manganèse, le titane et un mélange de ceux-ci, notamment choisi parmi le cuivre, le fer, le nickel, le zinc et un mélange de ceux-ci. Le métal pourra être plus particulièrement le cuivre.

D'autres métaux (que le métal principal susmentionné) pourront être présents dans cette couche de dépôt métallique, tels que l'or, l'argent, le plomb, le ruthénium, l'iridium ou un mélange de ceux-ci. Avantageusement, ces autres métaux ne représenteront pas plus de 80 %, notamment pas plus de 50 % en poids, de préférence pas plus de 30 % en poids de la couche de dépôt métallique.

La surface de ce dépôt de métal (c'est-à-dire la surface externe du dépôt métallique non en contact avec le support électro-conducteur) se trouve sous une forme oxydée, sulfurée, sélénée et/ou tellurée, c'est-à-dire que le métal à la surface de ce dépôt métallique se trouve sous une forme oxydée, sulfurée, sélénée et/ou tellurée.

Par « forme oxydée, sulfurée, sélénée et/ou tellurée » d'un métal M, on entend au sens de la présente invention les formes chimiques MₓO_{y}, MₓS_{y}, MₓSe_{y}, MₓTe_{y}, et des mélanges de celles-ci où x et y représentent des nombres entiers dépendant du degré d'oxydation du métal M. Par exemple, dans le cas du cuivre, les formes oxydées peuvent être CuO et CuzO (de préférence CuO), les formes sulfurées peuvent être CuS et CuzS (de préférence CuS), les formes sélénées peuvent être CuSe et CuzSe et les formes tellurées peuvent être CuTe et CuzTe. De préférence il s'agira d'une forme oxydée et/ou sulfurée, notamment oxydée ou sulfurée. Il s'agira en particulier des formes CuO ou CuS.

Selon un mode de réalisation particulier de l'invention, la surface du dépôt métallique est sous une forme oxydée, sulfurée, sélénée ou tellurée.

Selon un autre mode de réalisation particulier de l'invention, la surface du dépôt métallique est sous une forme oxydée et/ou sulfurée, notamment oxydée ou sulfurée.

L'épaisseur de la couche oxydée, sulfurée, sélénée et/ou tellurée à la surface du dépôt de métal n'est pas critique. Elle peut être par exemple comprise entre 1 nm et 1 µm, de préférence comprise entre 10 et 500 nm. Dans l'exemple 1, la couche oxydée a une épaisseur d'environ 250 nm.

Cette épaisseur peut être mesurée par microscopie électronique en transmission (MET) d'une coupe de l'électrode réalisée par la technique de sonde ionique focalisée.

Ce dépôt métallique oxydé, sulfuré, séléné et/ou telluré en surface représente le système catalytique permettant d'effectuer notamment une oxydation de l'eau en dioxygène dans un procédé d'électrolyse.

La présente invention a pour second objet un procédé de préparation d'une électrode selon la présente invention comprenant les étapes successives suivantes :
(i) électrodéposition d'un métal choisi dans le groupe constitué par le cuivre, le fer, le nickel, le zinc, le cobalt, le manganèse, le titane et un mélange de ceux-ci, et de préférence étant le cuivre, sur au moins une partie de la surface d'un support électro-conducteur afin de former un dépôt dudit métal sur ladite au moins une partie de la surface du support électro-conducteur, et
(ii) oxydation, sulfuration, sélénation et/ou telluration de la surface dudit dépôt de métal,
dans lequel l'étape (i) est réalisée selon les étapes successives suivantes :
(a) immersion au moins partiellement du support électro-conducteur dans une solution aqueuse acide contenant des ions du cuivre à déposer, et
(b) application d'un courant entre le support électro-conducteur et une seconde électrode.

Le support électro-conducteur sera tel que défini précédemment. Ainsi, un tel support sera constitué, au moins en partie et de préférence totalement, par un matériau électro-conducteur qui pourra être un matériau composite constitué par plusieurs matériaux électro-conducteurs distincts. Le matériau électro-conducteur pourra être choisi notamment parmi un métal tel que le cuivre, l'acier, l'aluminium, le zinc, le titane ; un oxyde métallique tel que l'oxyde de titane dopé au fluor (FTO - Fluorine-doped Tin Oxide en anglais) ou l'oxyde d'étain dopé à l'indium (ITO - Indium Tin Oxide en anglais) ; un sulfure métallique tel que le sulfure de cadmium ou le sulfure de zinc ; du carbone notamment sous forme de feutre de carbone, de graphite , de carbone vitreux, diamant dopé au bore ; un semi-conducteur tel que du silicium ; et un mélange de ceux-ci.
Ce support pourra prendre toute forme adaptée pour une utilisation en tant qu'électrode, l'homme du métier étant à même de déterminer la forme et les dimensions d'un tel support selon l'utilisation envisagée. La surface d'un tel support est recouverte au moins partiellement par le dépôt de métal. Avantageusement, au moins 5 %, en particulier au moins 20 %, notamment au moins 50 %, de préférence au moins 80 %, de la surface du support est recouvert par le dépôt de métal. Selon un mode de réalisation particulier, toute la surface du support est recouverte par le dépôt de métal.

Ce support électro-conducteur sera avantageusement nettoyé avant d'effectuer l'électrodéposition selon des techniques bien connues de l'homme du métier.

Le métal déposé sur le support sera avantageusement choisi parmi le cuivre, le fer, le nickel, le zinc, le cobalt, le manganèse, le titane et un mélange de ceux-ci, notamment parmi le cuivre, le fer, le nickel, le zinc et un mélange de ceux-ci. Le métal pourra être plus particulièrement le cuivre.

### Etape (i) :

L'électrodéposition est réalisée selon les étapes suivantes :
(a) immersion au moins partiellement du support électro-conducteur dans une solution aqueuse acide contenant des ions du métal à déposer, et
(b) application d'un courant entre le support électro-conducteur et une seconde électrode.

### Etape (a) :

La solution aqueuse acide contenant des ions du métal à déposer sera plus particulièrement une solution aqueuse acide contenant un sel du métal à déposer (encore appelé sel métallique), introduit éventuellement sous une forme hydratée. Ce sel métallique, éventuellement sous une forme hydratée, pourra être n'importe quel sel hydrosoluble dudit métal. Il pourra s'agir par exemple :
- pour le cuivre : CuSO₄, CuCl₂, Cu(ClO₄)₂,
- pour le fer : FeSO₄, Fe₂(SO₄)₃, FeCl₃, FeCl₂, Fe(ClO₄)₃,
- pour le nickel : NiSO₄, NiCl₂, Ni(ClO₄)₂,
- pour le zinc : ZnSO₄, ZnCl₂, Zn(ClO₄)₂,
- pour le cobalt : CoSO₄, CoCl₂, Co(ClO₄)₂,
- pour le manganèse : MnCl₂, MnSO₄, Mn(ClO₄)₂,
- pour le titane : TiCl₃, Ti₂(SO₄)₃,
ou d'un mélange de ceux-ci.

Il pourra s'agir en particulier de CuSO₄.

Le sel métallique sera présent dans la solution avantageusement à une concentration comprise entre 0,1 mM et 10 M, notamment comprise entre 1 mM et 1 M.

Il pourrait être envisagé également d'utiliser des complexes métalliques formés entre l'ion du métal à déposer et un ou des ligands organiques tels que par exemple des porphyrines, des acides aminés ou des amines, pour introduire les ions métalliques dans la solution aqueuse.

L'acide introduit dans la solution aqueuse pourra être tout acide, qu'il soit organique ou inorganique. Il pourra s'agir par exemple de l'acide sulfurique, l'acide chlorhydrique, l'acide bromhydrique, l'acide formique ou l'acide acétique, notamment l'acide sulfurique. De préférence, il ne s'agira pas de l'acide nitrique. Cet acide pourra être présent dans la solution aqueuse acide avantageusement à une concentration comprise entre 0,1 mM et 10 M, notamment comprise entre 10 mM et 3 M.

La solution aqueuse acide est préparée avantageusement en utilisant de l'eau déionisée afin de mieux contrôler la composition ionique de la solution.

Le support électro-conducteur sera immergé totalement ou partiellement dans la solution aqueuse acide contenant les ions du métal à déposer selon si un dépôt sur toute la surface ou sur seulement une partie de la surface du support est souhaité.

Afin d'obtenir un dépôt sur seulement une partie de la surface du support, il pourra également être envisagé d'appliquer un masque constitué d'un matériau isolant sur les parties du support qui ne doivent pas être recouvertes par le dépôt métallique. Dans ce cas, le support complet, sur lequel aura été appliqué le masque, pourra être immergé dans la solution aqueuse acide contenant les ions du métal à déposer. Ce masque sera retiré du support après dépôt du métal.

### Etape (b) :

Dans cette étape, le support électro-conducteur jouera le rôle de cathode, tandis que la seconde électrode jouera le rôle d'anode.

La seconde électrode sera avantageusement immergée dans la solution aqueuse acide contenant les ions du métal à déposer mais pourra également être immergée dans une autre solution d'électrolyte reliée électriquement à la première. L'utilisation d'une seule solution d'électrolyte, à savoir la solution aqueuse acide contenant les ions du métal à déposer, reste préférée.

La nature de la seconde électrode n'est pas critique. Elle est juste nécessaire à la réalisation de l'électrodéposition par un procédé d'électrolyse. Il pourra s'agir par exemple une électrode de platine ou de titane.

Le courant appliqué entre le support électro-conducteur et la seconde électrode pourra être alternatif ou continu. Il sera avantageusement continu et aura de préférence une densité de courant élevée comprise entre 0,1 mA/cm² et 5 A/cm², notamment comprise entre 0,1 mA/cm² et 1 mA/cm². Alternativement, une tension permettant de générer une densité de courant équivalente pourra être appliquée entre les électrodes.

Lors de l'application du courant, deux réactions de réduction auront lieu à la cathode :
- d'une part la réduction des ions métalliques en métal de degré d'oxydation 0 selon la réaction suivante avec M représentant le métal et x représentant son degré d'oxydation initial :

   M^{X+} + xe⁻ → M
- d'autre part la réduction des protons en dihydrogène selon la réaction suivante :

   2H⁺ + 2e⁻ → H₂

De même, une réaction d'oxydation aura lieu au niveau de l'anode lors de l'application du courant. La nature de cette réaction d'oxydation n'est pas cruciale. Il pourra s'agir par exemple de l'oxydation de l'eau.

L'électrodéposition permet ainsi le dépôt à la surface du support électro-conducteur d'une fine couche de métal avec une surface spécifique élevée, la croissance du métal à la surface du support électro-conducteur se faisant de manière dendritique. En outre, la formation de bulles de dihydrogène à la surface du support électro-conducteur, grâce à la réaction de réduction des protons, permet également de conférer une structure poreuse à cette couche de dépôt métallique permettant ainsi d'accroître encore cette surface spécifique. Le choix de la densité de courant permettra notamment d'optimiser la taille et le nombre de bulles formées de manière à obtenir la structure et la surface spécifique voulue pour le dépôt métallique.

Le courant sera par ailleurs appliqué pendant une durée suffisante pour obtenir la quantité de dépôt souhaitée, notamment pour obtenir une épaisseur de ladite couche de dépôt métallique comprise entre 10 µm et 2 mm, notamment comprise entre 50 µm et 0,5 mm, de préférence comprise entre 70 µm et 300 µm. Par exemple, le courant pourra être appliquée pendant une durée comprise entre 1 et 3600 s, par exemple entre 15 et 1200 s, notamment comprise entre 30 et 300 s.

La durée d'application et la densité de courant pourront être adaptées en fonction des conditions réactionnelles choisies telles que la nature et la concentration des ions métalliques, la concentration en acide, etc. afin d'obtenir le dépôt métallique souhaité, notamment avec la surface spécifique et l'épaisseur souhaitées.

L'électrodéposition sera effectuée avantageusement par une méthode galvanostatique, c'est-à-dire par application d'un courant constant durant toute la durée du dépôt.

Une fois le courant appliqué, le support électro-conducteur dont au moins une partie de la surface est recouverte par un dépôt métallique pourra être retiré de la solution dans laquelle il était immergé. Il devra être nettoyé, notamment à l'eau (par ex. de l'eau distillée), avant d'être séché, notamment sous vide, ou sous flux d'un gaz inerte (argon, azote, hélium, etc.).

### Etape (ii) :

Une fois le métal déposé sur au moins une partie de la surface du support électro-conducteur, la surface externe du dépôt métallique va être oxydée, sulfurée, sélénée et/ou tellurée.

L'étape d'oxydation sera avantageusement effectuée dans une atmosphère contenant du dioxygène (par ex. l'air) ou en présence d'H₂O, de préférence dans une atmosphère contenant du dioxygène (par ex. l'air). L'étape de sulfuration sera avantageusement effectuée en présence de soufre élémentaire ou de H₂S, de préférence en présence de soufre élémentaire. L'étape de sélénation sera avantageusement effectuée en présence de sélénium élémentaire ou de H₂Se, de préférence en présence de sélénium élémentaire. L'étape de telluration sera avantageusement effectuée en présence de tellure élémentaire ou de H₂Te, de préférence en présence de tellure élémentaire.

Cette étape d'oxydation, sulfuration, sélénation et/ou telluration sera effectuée avantageusement à une température élevée, notamment à une température comprise entre 30 et 700°C, notamment comprise entre 50 et 500°C, en particulier comprise entre 100 et 400°C.

Une étape de recuit pourra être effectuée à la suite de l'étape d'oxydation, sulfuration, sélénation et/ou telluration. Cette étape de recuit sera effectuée avantageusement à une température comprise entre 50°C et 1000°C, en particulier comprise entre 100° C et 400° C. Cette étape de recuit sera effectuée avantageusement sous atmosphère de gaz inerte (Ar, N₂, He, ...) ou sous vide. Cette étape de recuit sera effectuée avantageusement pendant une durée suffisamment longue, en particulier durant un temps compris entre 10 min et 48 h, notamment compris entre 1 et 3 h.

De manière surprenante, une surface spécifique élevée est maintenue après cette étape d'oxydation, sulfuration, sélénation et/ou telluration et éventuellement de recuit.

### Etape (iii) :

Une étape additionnelle de dépôt d'oxyde métallique à la surface du dépôt de métal pourra éventuellement être réalisée après l'étape (ii). Cela permettra ainsi d'avoir une couche additionnelle d'oxyde métallique à la surface du dépôt métallique.

L'oxyde métallique sera un oxyde d'un métal choisi parmi le cuivre, le fer, le nickel, le zinc, le cobalt, le manganèse, le titane et un mélange de ceux-ci. De préférence, il s'agira d'oxyde de cuivre, et plus particulièrement CuO.

Ce dépôt d'oxyde métallique pourra avantageusement être réalisé selon les étapes suivantes :
(1) immersion au moins de la partie du support électro-conducteur recouvert d'un dépôt métallique dont la surface externe est oxydée, sulfurée, sélénée et/ou tellurée obtenu à l'étape (ii) dans une solution contenant des ions du métal de l'oxyde métallique à déposer (de préférence des ions de cuivre) et avantageusement de l'eau, et
(2) application d'un potentiel entre le support électro-conducteur et une seconde électrode, le potentiel électrique appliqué au support électro-conducteur étant négatif puis positif.

### Etape (1) :

La solution contenant des ions du métal de l'oxyde métallique à déposer sera plus particulièrement une solution contenant un sel du métal de l'oxyde métallique à déposer (encore appelé sel métallique), introduit éventuellement sous une forme hydratée. Ce sel métallique, éventuellement sous une forme hydratée, pourra être n'importe quel sel dudit métal. Par exemple, pour le cuivre, il pourra s'agir de CuSO₄, CuCl₂ ou Cu(ClO₄)₂ ou d'un mélange de ceux-ci.

Il pourrait être envisagé également d'utiliser des complexes métalliques formés entre l'ion du métal de l'oxyde métallique à déposer et un ou des ligands organiques tels que par exemple des porphyrines, des acides aminés ou des amines (e.g. imidazole, 1,4,8,11-tétraazacyclotétradécane (cyclam) ou 1,4,8,11-tétraméthyl-1,4,8,11-tétraazacyclotétradécane (Me₄-cyclam), pour introduire les ions métalliques dans la solution aqueuse. Dans le cas du cuivre, il pourra s'agir de CuCl₂ complexé avec un ou plusieurs, notamment 1 ou 2, ligands organiques, de préférence azotés tels que des amines. Il pourra s'agir en particulier de Cu(imidazole)₂Cl₂, Cu(cyclam)Cl₂ ou Cu(Me₄-cyclam)Cl₂, de préférence de Cu(imidazole)₂Cl₂.

Il s'agira en particulier de Cu(imidazole)₂Cl₂.

Le sel métallique sera présent dans la solution avantageusement à une concentration comprise entre 0,1 mM et 10 M, notamment comprise entre 1 mM et 0,1 M.

La solution contenant des ions du métal de l'oxyde métallique à déposer pourra être une solution dans l'eau et/ou un solvant organique, notamment dans l'eau ou dans un mélange eau / solvant organique. Le solvant utilisé (eau et/ou solvant organique) sera choisi de manière à pouvoir solubiliser le sel métallique. Le solvant organique pourra être tout solvant approprié tel que l'acétonitrile, la pyridine, le tétrahydrofurane (THF), le diméthylsulfoxyde (DMSO) ou le diméthylformamide (DMF), notamment l'acétonitrile. L'eau utilisée sera de préférence de l'eau déionisée afin de mieux contrôler la composition ionique de la solution.

La solution pourra également contenir un sel de fond, à savoir un sel qui ne peut être ni oxydé, ni réduit et ne participe donc pas à la réaction d'oxydo-réduction mais qui permet de conduire le courant. La nature du sel de fond n'est donc pas critique. Il convient de le choisir de sorte à ce qu'il soit soluble dans le solvant utilisé (eau et/ou solvant organique). Il pourra s'agir de TBAPF₆ (hexafluorophosphate de tétrabutylammonium) ou encore de TBABF₄ (tétrafluoroborate de tétrabutylammonium).

Le support électro-conducteur sera immergé totalement ou partiellement dans la solution contenant les ions du métal de l'oxyde métallique à déposer selon la surface du support à recouvrir.

### Etape (2) :

Cette étape de dépôt par voltampérométrie cyclique comprend deux phases, à savoir :
- l'application d'une rampe de courant entre le support électro-conducteur et une seconde électrode vers un potentiel électrique négatif appliqué au support électro-conducteur : cette phase permet l'électrodéposition de métal à la surface du dépôt métallique obtenu à l'étape (ii), le support électro-conducteur jouant alors le rôle de cathode et la seconde électrode jouant le rôle d'anode ; puis
- l'application d'une rampe courant entre le support électro-conducteur et une seconde électrode vers un potentiel électrique positif appliqué au support électro-conducteur : cette phase permet l'oxydation du métal déposé à la surface du dépôt métallique obtenu à l'étape (ii), le support électro-conducteur jouant alors le rôle d'anode et la seconde électrode jouant le rôle de cathode.

Cette étape (2) comprenant les deux phases susmentionnées pourra être réitérée une ou plusieurs fois de manière à optimiser le dépôt d'oxyde métallique et les performances de l'électrode obtenue. Avantageusement, l'étape (2) est réalisée 1 ou 2 fois, notamment 2 fois.

La seconde électrode sera avantageusement immergée dans la solution contenant les ions du métal de l'oxyde métallique à déposer mais pourra également être immergée dans une autre solution d'électrolyte reliée électriquement à la première. L'utilisation d'une seule solution d'électrolyte, à savoir la solution contenant les ions du métal de l'oxyde métallique à déposer et de l'eau, reste préférée.

La nature de la seconde électrode n'est pas critique. Elle est juste nécessaire à la réalisation de l'électrodéposition puis de l'oxydation. Il pourra s'agir par exemple une électrode de platine ou de titane.

Lors de l'application du courant avec un potentiel négatif appliqué au support électro-conducteur, une réaction de réduction aura lieu à la cathode (support électro-conducteur), à savoir la réduction des ions métalliques en métal de degré d'oxydation 0 selon la réaction suivante avec M représentant le métal et x représentant son degré d'oxydation initial :

M^{X+} + xe⁻ → M.

De même, une réaction d'oxydation aura lieu au niveau de l'anode lors de l'application du courant. La nature de cette réaction d'oxydation n'est pas cruciale. Il pourra s'agir par exemple de l'oxydation de l'eau.

Cette phase permet ainsi l'électrodéposition d'une fine couche de métal à la surface du dépôt métallique obtenu à l'étape (ii).

Lors de l'application du courant avec un potentiel positif appliqué au support électro-conducteur en présence d'une source d'oxygène (qui pourra être de l'eau, des ions hydroxydes, du dioxygène ou une autre source d'oxygène, de préférence de l'eau), une réaction d'oxydation aura lieu à l'anode (support électro-conducteur), à savoir l'oxydation du métal, par exemple selon la réaction suivante dans le cas de l'eau comme source d'oxygène avec M représentant le métal et x représentant son degré d'oxydation :

M + H₂O → MO + 2 e + 2 H⁺.

De même, une réaction de réduction aura lieu au niveau de la cathode lors de l'application du courant. La nature de cette réaction de réduction n'est pas cruciale. Il pourra s'agir par exemple de la réduction de l'eau

2 H₂O + 2 e⁻ → H₂ + 2 OH⁻

Cette phase permet ainsi l'oxydation de la fine couche de métal électrodéposée à la surface du dépôt métallique obtenu à l'étape (ii).

Cette étape (2) pourra avantageusement être réalisée par un ou plusieurs, notamment 1 ou 2, cycles de voltampérométrie cyclique, c'est-à-dire par application d'un courant variant linéairement dans le temps.

Une fois l'oxyde métallique déposé, le support électro-conducteur pourra être retiré de la solution dans laquelle il était immergé. Il devra être nettoyé, notamment à l'eau (par ex. de l'eau distillée), avant d'être séché, notamment sous vide, ou sous flux d'un gaz inerte (argon, azote, hélium, etc.).

L'électrode selon la présente invention est une électrode susceptible d'être obtenue par le procédé susmentionné.

La présente invention a pour troisième objet un dispositif électrochimique comprenant une électrode selon la présente invention.

Par « dispositif électrochimique », on entend au sens de la présente invention un dispositif permettant de convertir l'énergie électrique en énergie chimique (par ex. un dispositif d'électrolyse) ou inversement de convertir l'énergie chimique en énergie électrique (par ex. une pile à combustible). Le dispositif électrochimique selon la présente invention sera donc plus particulièrement un dispositif d'électrolyse ou une pile à combustible.

Un tel dispositif électrochimique comprendra une seconde électrode qui pourra éventuellement être également une électrode selon la présente invention. L'une des électrodes jouera le rôle d'anode où se produira une oxydation, l'autre électrode jouera le rôle de cathode où se produira une réduction.

Un tel dispositif mettra donc en oeuvre une substance à oxyder (par ex. H₂ dans une pile à combustible ou H₂O dans un dispositif d'électrolyse) et une substance à réduire (par ex. O₂ dans une pile à combustible ou H₂O ou CO₂ dans un dispositif d'électrolyse). Dans un dispositif d'électrolyse, la réaction d'oxydo-réduction sera forcée, c'est-à-dire provoquée par le courant électrique appliqué. Dans la pile à combustible, la réaction d'oxydo-réduction sera spontanée, permettant la génération d'énergie électrique.

De tels dispositifs comprendront notamment d'autres éléments bien connus de l'homme du métier dans le domaine de l'électrochimie tels qu'une ou plusieurs autres électrodes (en particulier une électrode de référence de potentiel), une source d'énergie, une membrane, un sel de fond, un dispositif permettant le flux de réactifs, d'un dispositif de collecte des gaz formés, etc. L'homme du métier sait cependant parfaitement comment réaliser et mettre en oeuvre un tel dispositif électrochimique.

Le dispositif électrochimique selon la présente invention sera avantageusement un dispositif d'électrolyse. Avantageusement, ce dispositif utilisera l'électrode selon la présente invention comme anode, en particulier pour oxyder l'eau en dioxygène selon la réaction suivante :

2H₂O → O₂ + 4H⁺ + 4e⁻

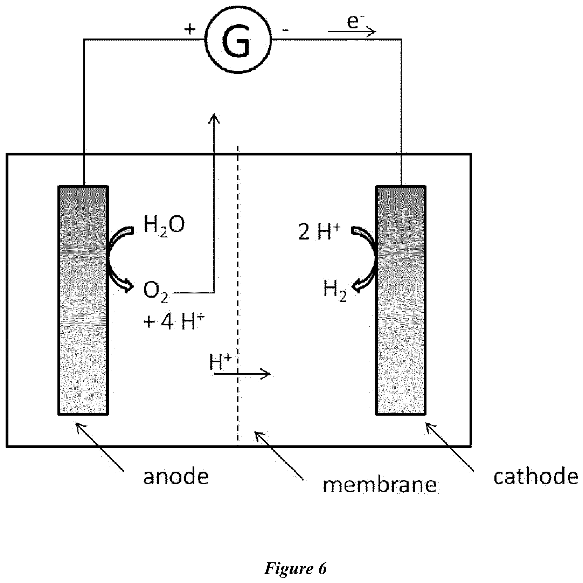

Un exemple de dispositif d'électrolyse de l'eau est représenté à la Figure 6.

La présente invention a également pour quatrième objet un procédé d'oxydation de l'eau en dioxygène comprenant l'application d'un courant électrique entre une anode et une cathode, l'anode étant une électrode selon l'invention immergée dans l'eau ou dans un fluide contenant de l'eau.

Par « immergée » dans un fluide, on entend au sens de l'invention que l'électrode est plongée dans le fluide au moins partiellement. Dans le cas de l'électrode selon l'invention, la partie de l'électrode recouverte par le dépôt métallique, dont la surface est oxydée, sulfurée, sélénée et/ou tellurée, doit être au moins partiellement plongée dans le fluide.

Dans un tel procédé, l'anode, correspondant à une électrode selon la présente invention, sera immergée de préférence dans de l'eau, et plus particulièrement dans de l'eau ayant un pH basique (entre 7 et 14, préférentiellement entre 10 et 14), obtenue par exemple par ajout de soude.

La cathode pourra également être immergée dans le même fluide ou pourra être immergée dans un autre fluide. Du CO₂ pourra être ajouté à ce fluide par bullage ou pressurisation du milieu. Dans le cas où l'anode et la cathode ne sont pas immergées dans le même fluide, ces deux fluides pourront être séparés par exemple par une membrane échangeuse d'ions (par ex. de protons), osmotique ou encore de dialyse afin de permettre le passage des charges ou de molécules de solvant d'un fluide à l'autre.

La cathode pourra être toute électrode utilisée classiquement dans l'art comme cathode et que connaît bien l'homme du métier. Une telle cathode pourra être par exemple du platine, du cobalt, du cuivre ...

Lors de l'application d'un courant entre l'anode et la cathode, l'eau sera oxydée en dioxygène au niveau de l'anode selon la réaction suivante :

2H₂O → O₂ + 4H⁺ + 4e⁻

permettant ainsi la production d'oxygène au niveau de l'anode.

Le courant appliqué entre les deux électrodes aura notamment une différence de potentiel comprise entre 1,2 V et 10 V, en particulier comprise entre 1,4 V et 4 V.

L'utilisation d'une électrode selon l'invention permet d'effectuer cette réaction d'oxydation de l'eau en dioxygène avec une surtension inférieure à 350 mV, voire même inférieure à 300 mV, pour une densité de courant de 10 mA/cm² ou encore inférieure à 550 mV, pouvant aller au moins jusqu'à 450 mV, pour une densité de courant de 100 mA/cm². Dans le cas d'une électrode cuivre/oxyde de cuivre selon l'invention, cette réaction peut être effectuée avec une surtension de 340 mV ou encore de 290 mV pour une densité de courant de 10 mA/cm² ; ou de 530 mV ou encore de 450 mV pour une densité de courant de 100 mA/cm².

L'électrode selon l'invention permet ainsi de pouvoir effectuer de manière efficace la réaction d'oxydation de l'eau en dioxygène, tout en ayant un système catalytique peu onéreux.

Un exemple de procédé selon l'invention est illustré à la Figure 6.

La présente invention est illustrée par les figures et les exemples non limitatifs ci-dessous.

### FIGURES

Les Figures1A à 1D représentent des images de microscopie électronique à balayage MEB des électrodes Cu/CuₓO_{y} obtenue à l'exemple 1 (Figures 1A et 1C) et Cu/CuₓS_{y} obtenue à l'exemple 2 (Figures 1B et 1D).
La Figure 2 représente le diffractogramme par rayons X sur poudre de l'électrode Cu/CuₓO_{y} obtenue à l'exemple 1.
Les Figures 3A et 3B représentent respectivement la voltamétrie à balayage linéaire (A) et le tracé de Tafel (B) de l'électrode Cu/CuₓO_{y} obtenue à l'exemple 1 dans une solution aqueuse de NaOH 1,0 M.
Les Figures 4A et 4B représente le spectre large (A) et le spectre haute résolution centré sur le souffre (B) obtenus par spectrométrie de photoélectrons induits par rayons X de l'électrode Cu/CuₓS_{y} obtenue à l'exemple 2.
Les Figures 5A et 5B représentent respectivement la voltamétrie à balayage linéaire (A) et le tracé de Tafel (B) de l'électrode Cu/CuₓS_{y} obtenue à l'exemple 2 dans une solution aqueuse de NaOH 1,0 M.
La Figure 6 illustre un procédé / dispositif d'électrolyse de l'eau dans lequel l'eau est oxydée en dioxygène à l'anode qui est une électrode selon la présente invention.
Les Figures 7A et 7B représentent des images de microscopie électronique à balayage MEB de l'électrode Cu/CuₓO_{y}/CuO NP obtenue à l'exemple 6.
La Figure 8 représente le diffractogramme par rayons X sur poudre de l'électrode Cu/CuₓO_{y}/CuO NP obtenue à l'exemple 6.
Les Figures 9A et 9B représentent respectivement la voltamétrie à balayage linéaire (A) et le tracé de Tafel (B) de l'électrode Cu/CuₓO_{y}/CuO NP obtenue à l'exemple 6 dans une solution aqueuse de KOH 1,0 M.
Les Figures 10A et 10B représentent respectivement la voltamétrie à balayage linéaire (A) et le tracé de Tafel (B) de l'électrode Cu/CuₓO_{y} (FTO) obtenue à l'exemple 7 dans une solution aqueuse de KOH 1,0 M.
Les Figures 11A et 11B représentent respectivement la voltamétrie à balayage linéaire (A) et le tracé de Tafel (B) de l'électrode Cu/CuₓO_{y} (FC) obtenue à l'exemple 8 dans une solution aqueuse de KOH 1,0 M.
Les Figures 12A et 12B représentent respectivement la voltamétrie à balayage linéaire (A) et le tracé de Tafel (B) de l'électrode Cu/CuₓO_{y} (Ti) obtenue à l'exemple 9 dans une solution aqueuse de KOH 1,0 M.
La figure 13 montre des clichés obtenus en MET d'une coupe d'électrode réalisée par sonde ionique focalisée : (a) image STEM-HAADF indiquant par des cercles les zones ou les clichés SAED furent mesurés (b)(c) analyses STEM-XEDS (Cu en gris foncé, O en gris clair) (Cu en vert et O en rouge sur l'image couleur d'origine) (d)(e)(f) clichés SAED des zones indiquées en (a).

### EXEMPLES

### Considérations générales :

Les mesures électrocatalytiques et les expériences d'électrolyse sont réalisées dans une cellule à trois électrodes à deux compartiments, permettant une séparation des produits en phase gazeuse aux compartiments anodique et cathodique à l'aide d'un potentiostat SP300 Bio-Logic. Une électrode de référence Ag/AgCl est placée dans le même compartiment que l'électrode de travail. Une contre-électrode de platine est placée dans un compartiment séparé relié par un verre fritté porosité 5 rempli de la solution électrolytique. Les potentiels sont référencés par rapport à l'électrode réversible à hydrogène (ERH) en utilisant l'équation ci-dessous :

E_{ERH} = E_{Ag/AgCl} + 0,197 + 0,059 * pH

Le résultat de voltamétrie à balayage linéaire n'est pas compensé vis-à-vis de la chute ohmique. Le rendement faradique a été obtenu en comparant la quantité théorique d'oxygène produite sur la base de la charge consommée à la quantité d'oxygène déterminée par chromatographie en phase gazeuse. Les images de microscopie électronique à balayage (MEB) ont été acquises à l'aide d'un microscope électronique à balayage Hitachi S-4800. Les clichés de diffraction des rayons X sur poudre des motifs ont été enregistrés en utilisant un diffractomètre X'Pert Pro P analytique muni d'une source de rayonnement Cu-Ka (λKα1 = 1,540598 Â, λKα2 = 1,544426 nm) ou une source de rayonnement Co-Ka (λKα1 = 1,78897 Å, λKα2 = 1,79285 Å) avec un détecteur X'Celerator. La chromatographie en phase gazeuse a été réalisée sur un chromatographe Shimadzu GC-2014 équipé d'une colonne Quadrex Molsieve 5A plot, d'un détecteur de conductivité thermique et en utilisant He comme gaz porteur (30 ml / min). Pour la préparation de l'électrode, la surface de la plaque de Cu (3cm × 1cm) a été nettoyée en utilisant du papier de verre (p 1200) suivie d'une immersion dans une solution 5,0M d'HCl pendant 30 s. La plaque est ensuite rincée avec de l'éthanol avant d'être séchée à l'air. L'équation de Randles-Sevcik (1) est utilisée pour calculer A_{diff}, la surface électroactive de l'électrode :

*i_{P}*= 2.69 ×10⁵ *n*^{3/2}*D*^{1/2}*A*_{diff}*C* v^{1/2} (1)

Le courant *iₚ* est le courant de crête correspondant à la réduction du couple redox (Fe³⁺/Fe²⁺), déterminé par voltamétrie cyclique de K₃[Fe(CN)₆], n est le nombre d'électrons échangés, D est le coefficient de diffusion de l'analyte (7,5 × 10⁻⁶ cm².s⁻¹ pour K₃[Fe(CN)₆]), C (mol.cm⁻³) est la concentration molaire en l'analyte et v est la vitesse de balayage (V.s⁻¹). La surface électroactive des électrodes est mesurée en utilisant une électrode de surface géométrique 1 cm² plongée dans une solution contenant 5 mM de K₃[Fe(CN)₆] et 0,1 M d'un tampon phosphate pH 7,0. L'application de l'équation (1) permet alors la détermination de la valeur de surface électroactive A_{diff}, et par conséquent de la surface spécifique déterminée par électrochimie en divisant cette valeur par la surface géométrique de l'électrode selon la relation : Surface spécifique déterminée par électrochimie = A_{diff}/A_{géométrique} (en cm²/cm²_{géométrique}). Les échantillons utilisés pour les mesures BET ont été obtenus par abrasion mécanique à l'aide d'une lame PVC (poly(chlorure de vinyle)) d'un 1 mm d'épaisseur du dépôt métallique présent sur le support.

### Exemple 1 : Préparation d'une électrode cuivre/oxyde de cuivre selon l'invention sur support cuivre

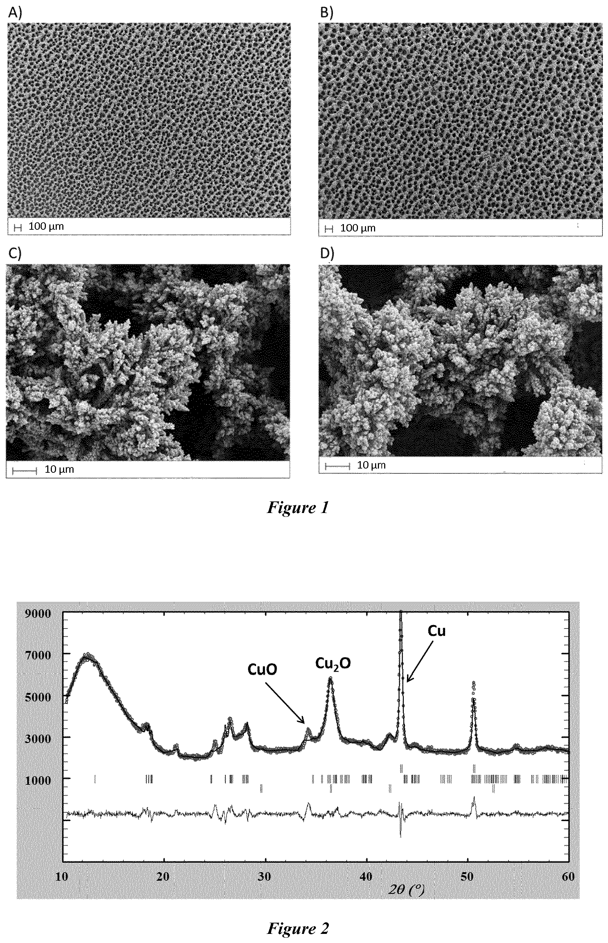

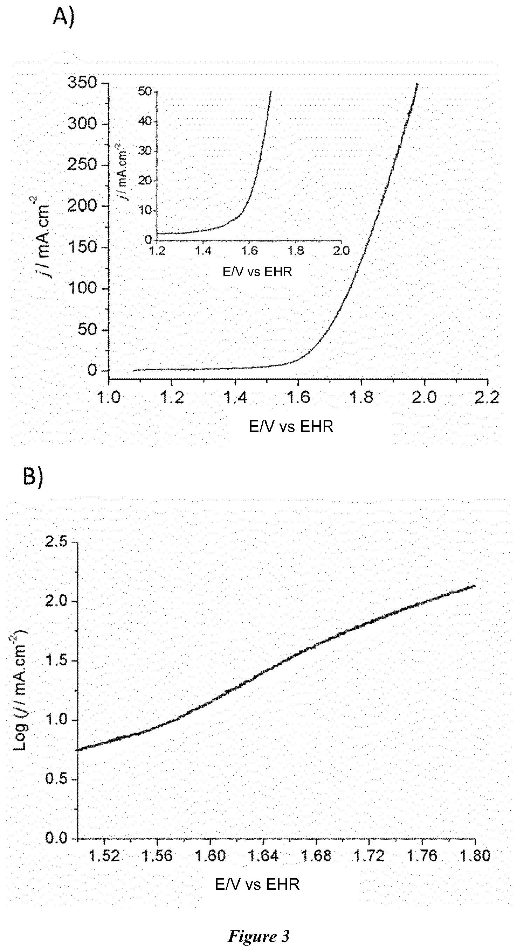

1 cm² d'une plaque de cuivre fraîchement nettoyée est immergée dans 20 ml d'une solution de CuSO₄ à 0,2 M, 1,5 M de H₂SO₄ et un courant de 0,5 A est appliqué en utilisant une méthode galvanostatique pendant une durée de 80 s. L'électrode est ensuite retirée de la solution et nettoyée avec de grandes quantités d'eau distillée et séchée sous vide (10 mbar). L'électrode est ensuite transférée dans un four sous atmosphère d'air statique (1 bar). La température est élevée à 310 °C à une vitesse de 10 °C par minute, et la température est maintenue constante pendant 1 heure. Après cette étape, l'électrode est refroidie à température ambiante et stockée à l'air. Cette électrode est nommée électrode Cu/CuₓO_{y} par la suite. Les Figures 1 A et 1C montrent des clichés obtenus par MEB de cette électrode et illustrent les nanostructures poreuses et la grande surface spécifique du matériau. Le diffractogramme de poudre par rayon X de cette électrode est présenté à la Figure 2 et révèle la présence de Cu, Cu₂O et CuO. La voltamétrie à balayage linéaire entre 1,2V et 2,0V vs ERH (Electrode Réversible à Hydrogène) dans une solution aqueuse de NaOH 1,0M avec une vitesse de balayage de 10mV/s est présentée à la Figure 3A. Une densité de courant de 10mA.cm⁻² a été obtenue à 340mV de surtension pour la production de dioxygène. Le tracé de Tafel de l'électrode est présenté à la Figure 3B. L'activité catalytique augmente linéairement de 1,56V à 1,66V vs ERH. La pente de la droite de Tafel a été déterminée dans cette région égale à 38mV.dec⁻¹. La surface spécifique déterminée par voie électrochimique est de 19,6 cm²/cm²_{géométrique}. La surface spécifique déterminée par BET est de 3,4 m²/g.

### Exemple 2 : Préparation d'une l'électrode cuivre/sulfure de cuivre selon l'invention sur support cuivre

1 cm² d'une plaque de cuivre fraîchement nettoyée est immergée dans 20 ml d'une solution de CuSO₄ à 0,2 M, 1,5 M de H₂SO₄ et un courant de 0,5 A est appliqué en utilisant une méthode galvanostatique pendant une durée de 80 s. L'électrode est ensuite retirée de la solution et nettoyée avec de grandes quantités d'eau distillée et séchée sous vide (10 mbar). L'électrode est ensuite transférée dans un réacteur en verre contenant 15 mg de poudre de soufre élémentaire dans un compartiment séparé mais connecté au reste du réacteur où se trouve l'électrode. Le vide (0,01 mbar) est fait dans le réacteur (y compris dans le compartiment contenant le soufre élémentaire) qui est maintenu sous vide statique et introduit dans un four. La température de l'ensemble est portée à 150 °C à une vitesse de 15 °C par minute, et la température est maintenue à 150 °C pendant 2 minutes. Après cette étape, le réacteur est retiré du four et laissé à refroidir à la température ambiante tout en faisant le vide dans le réacteur (vide dynamique). Après refroidissement à température ambiante, le compartiment contenant le soufre élémentaire est déconnecté du réacteur contenant l'électrode et le réacteur contenant l'électrode est réintroduit dans le four tout en faisant le vide (vide dynamique - 0,01 mbar). La température du four est élevée à 150 °C à une vitesse de 15 °C par minute, et la température est maintenue à 150 °C pendant 1 h. Après cette étape de recuit, l'électrode est refroidie à température ambiante sous vide dynamique et utilisée rapidement après sa préparation.

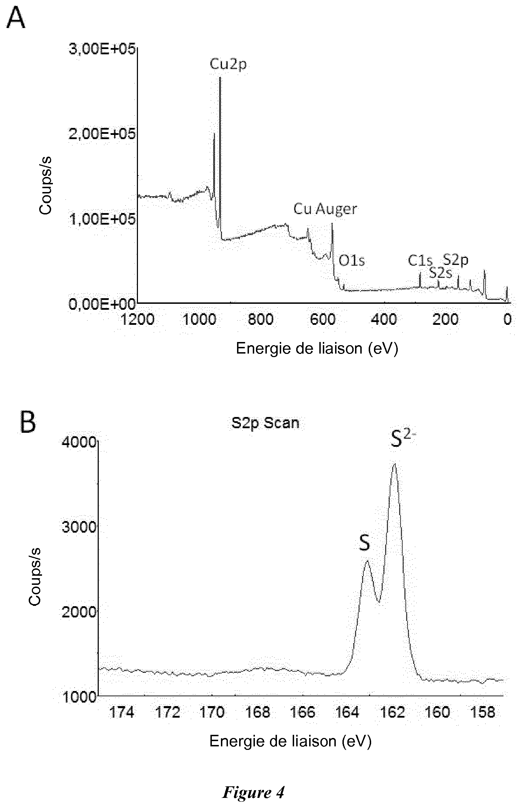

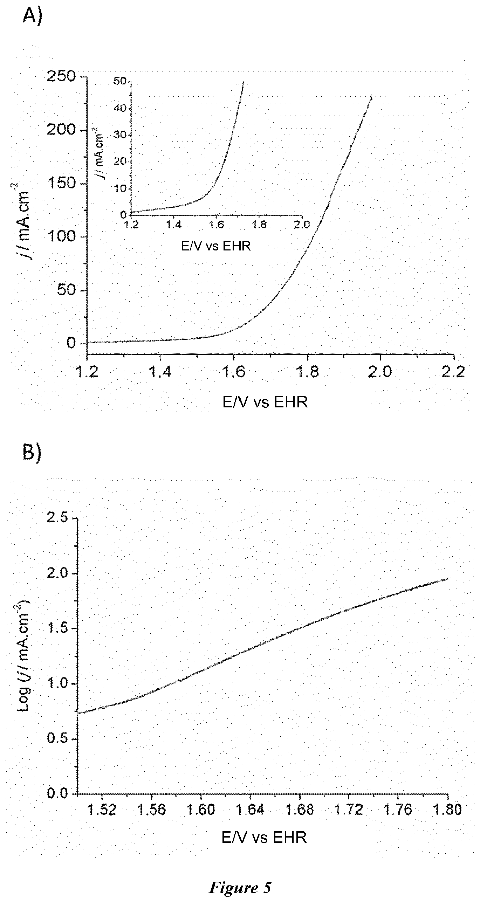

Cette électrode est nommée électrode Cu/CuₓS_{y} par la suite. Les Figures 1B et 1D montrent des clichés obtenus par MEB de cette électrode et illustrent les nanostructures poreuses et la grande surface spécifique du matériau. Le spectre obtenu par spectrométrie de photoélectrons induits par rayons X de cette électrode est présenté à la Figure 4, et révèle la présence de cuivre et de sulfure de cuivre. La voltamétrie à balayage linéaire entre 1,2V et 2,0V vs ERH dans une solution aqueuse de NaOH 1,0M avec une vitesse de balayage de 10mV/s est présentée à la Figure 5A. Une densité de courant de 10mA.cm⁻² a été obtenue à 340mV de surtension pour la production de dioxygène. Le tracé de Tafel de l'électrode est présenté à la Figure 5B. L'activité catalytique augmente linéairement de 1,56V à 1,66V vs ERH. La pente de la droite de Tafel a été déterminée dans cette région égale à 40 mV.dec⁻¹.

La surface spécifique déterminée par voie électrochimique est de 23,0 cm²/cm²_{géométrique}. La surface spécifique déterminée par BET est de 3,8 m²/g.

### Exemple 3 : Mesure de l'activité catalytique pour l'oxydation de l'eau de l'électrode Cu/CuₓO_{y}

L'électrolyse de l'eau est effectuée avec une surtension fixe appliquée de 400 mV en utilisant l'électrode Cu/CuₓO_{y} comme électrode de travail dans une solution aqueuse de NaOH 1,0 M. La génération d'une grande quantité d'oxygène gazeux est observée à l'électrode. L'oxygène produit est quantifié par chromatographie en phase gazeuse. Après 10 minutes d'électrolyse, le rendement faradique pour l'évolution de O₂ est estimé à 89 % (2,2 C consommé, 5,14 µmol O₂ généré, 0,5 cm² électrode plongeant dans la solution).

### Exemple 4 : Mesure de l'activité catalytique pour l'oxydation de l'eau de l'électrode Cu/CuₓS_{y}

L'électrolyse de l'eau est effectuée avec une surtension fixe appliquée de 400 mV en utilisant l'électrode Cu/CuₓS_{y} comme électrode de travail dans une solution aqueuse de NaOH 1,0 M. La génération d'une grande quantité d'oxygène gazeux est observée à l'électrode. L'oxygène produit est quantifié par chromatographie en phase gazeuse. Après 10 minutes d'électrolyse, le rendement faradique pour l'évolution de O₂ est estimé à 92 % (2,0 C consommé, 4,83 µmol O₂ généré, 0,5 cm² électrode plongeant dans la solution).

### Exemple 5 : Durabilité de l'électrode Cu/CuₓO_{y} en conditions catalytiques

L'électrolyse de l'eau est effectuée avec une surtension fixe appliquée de 600 mV en utilisant l'électrode Cu/CuₓO_{y} comme électrode de travail dans une solution aqueuse de NaOH 0,1 M. Durant toute la durée de l'expérience (4 h), une grande quantité d'oxygène gazeux est généré de manière constante. Aucun signe de désactivation n'est observé, une densité de courant stable de 20 mA/cm² étant observée durant toute la durée de l'expérience.

### Exemple 6 : Préparation d'une électrode cuivre/oxyde de cuivre selon l'invention sur support cuivre

1 cm² d'une plaque de cuivre fraîchement nettoyée est immergée dans 20 ml d'une solution de CuSO₄ à 0,2 M, 1,5 M de H₂SO₄ et un courant de 0,5 A est appliqué en utilisant une méthode galvanostatique pendant une durée de 80 s. L'électrode est ensuite retirée de la solution et nettoyée avec de grandes quantités d'eau distillée et séchée sous vide (10 mbar). L'électrode est ensuite transférée dans un four sous atmosphère d'air statique (1 bar). La température est élevée à 310 °C à une vitesse de 10 °C par minute, et la température est maintenue constante pendant 1 heure.

Après cette étape, l'électrode est refroidie à température ambiante. L'électrode ainsi préparée est ensuite plongée dans une solution de Cu(imidazole)₂Cl₂ (0,2 mM) dans un mélange acétonitrile / 3% eau (v/v) contenant également 0,1 M de sel de fond TBAPF₆ (hexafluorophosphate de tétrabutylammonium). L'électrode est alors soumise à deux cycles de voltampérométrie cyclique entre -0,5 V et 1 V (vs Ag/AgCl) et une vitesse de cycle de 50 mV/s. L'électrode ainsi obtenue est retirée de la solution et nettoyée avec de grandes quantités d'eau distillée et séchée à l'air à température ambiante.

Cette électrode est nommée électrode Cu/CuₓO_{y}/CuO NP par la suite.

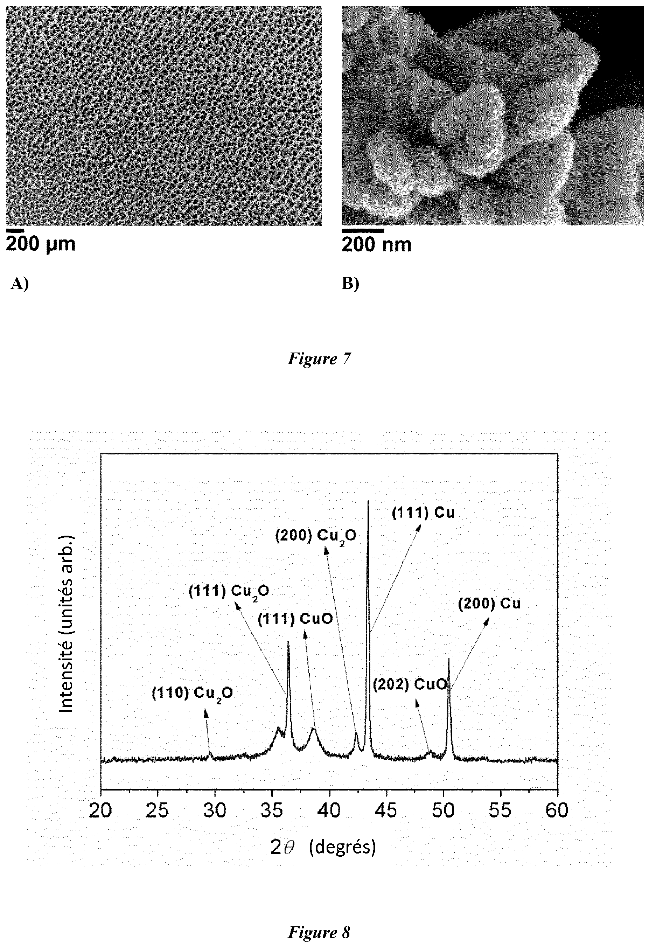

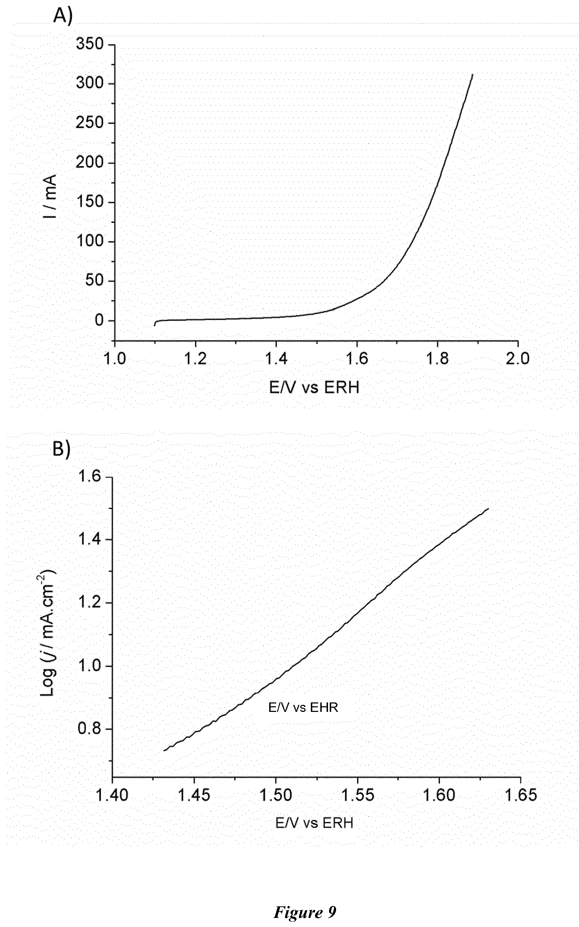

La Figure 7 montre des clichés obtenus par MEB de cette électrode et illustrent les nanostructures poreuses et la grande surface spécifique du matériau. Le diffractogramme de poudre par rayon X de cette électrode est présenté à la Figure 8 et révèle la présence de Cu, CuzO et CuO. La voltamétrie à balayage linéaire entre 1,2V et 2,0V vs ERH (Electrode Réversible à Hydrogène) dans une solution aqueuse de KOH 1,0M avec une vitesse de balayage de 10 mV/s est présentée à la Figure 9A. Une densité de courant de 10 mA.cm⁻² a été obtenue à 290 mV de surtension pour la production de dioxygène. Le tracé de Tafel de l'électrode est présenté à la Figure 9B. L'activité catalytique augmente linéairement de 1,56V à 1,66V vs ERH. La pente de la droite de Tafel a été déterminée dans cette région égale à 64 mV.dec⁻¹. La surface spécifique déterminée par voie électrochimique est de 20,6 cm²/cm²_{géométrique}.

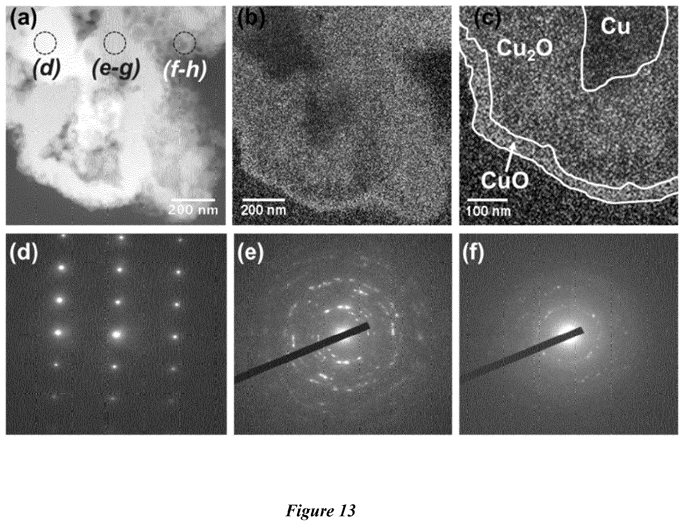

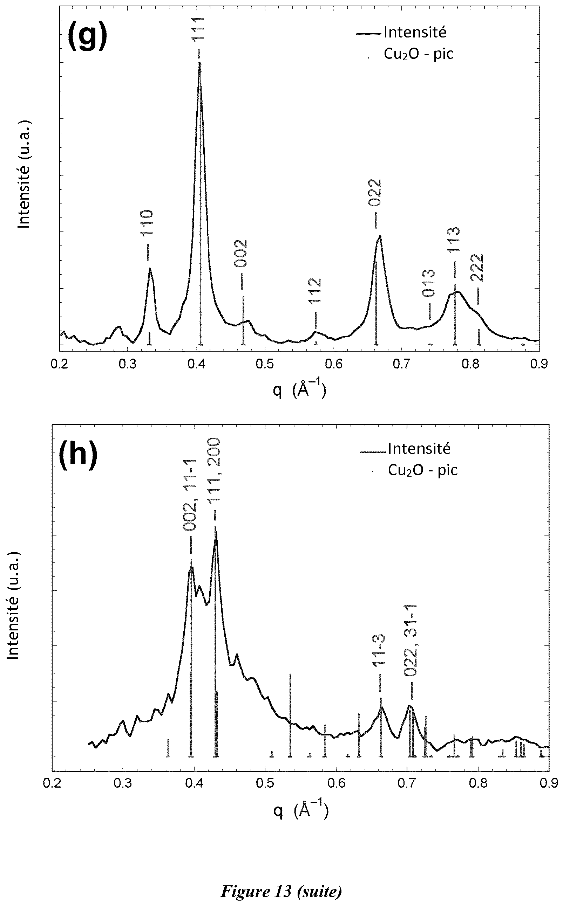

La Figure 13 montre des clichés obtenues en MET d'une coupe d'électrode réalisée par sonde ionique focalisée : (a) image STEM-HAADF (Scanning Transmission Electron Microscope / High-Angle Annular Dark-Field) indiquant les zones ou les clichés SAED (Selected Area Electron Diffraction) furent mesurés par des cercles (b)(c) analyses STEM-XEDS (Scanning Transmission Electron Microscope / X-ray Energy-Dispersive Spectroscopy) (Cu en gris foncé, O en gris clair) (Cu en vert et O en rouge sur l'image couleur d'origine) (d)(e)(f) clichés SAED des zones indiquées en (a) montrant la présence de cuivre métallique, de CuzO (zone (e)) ou CuO (zone(f)).

Le même exemple a été réalisé en remplaçant le sel de fond TBAPF₆ (hexafluorophosphate de tétrabutylammonium) par TBABF₄ (tétrafluoroborate de tétrabutylammonium).

### Exemple 7 : Préparation d'une électrode cuivre/oxyde de cuivre selon l'invention sur un support FTO

1 cm² d'une couche de FTO déposée sur une lame de verre fraîchement nettoyée est immergée dans 20 ml d'une solution de CuSO₄ à 0,2 M, 1,5 M de H₂SO₄ et un courant de 0,5 A est appliqué en utilisant une méthode galvanostatique pendant une durée de 80 s. L'électrode est ensuite retirée de la solution et nettoyée avec de grandes quantités d'eau distillée et séchée sous vide (10 mbar). L'électrode est ensuite transférée dans un four sous atmosphère d'air statique (1 bar). La température est élevée à 310 °C à une vitesse de 10 °C par minute, et la température est maintenue constante pendant 1 heure. Après cette étape, l'électrode est refroidie à température ambiante. Cette électrode est nommée électrode Cu/CuₓO_{y} (FTO) par la suite.

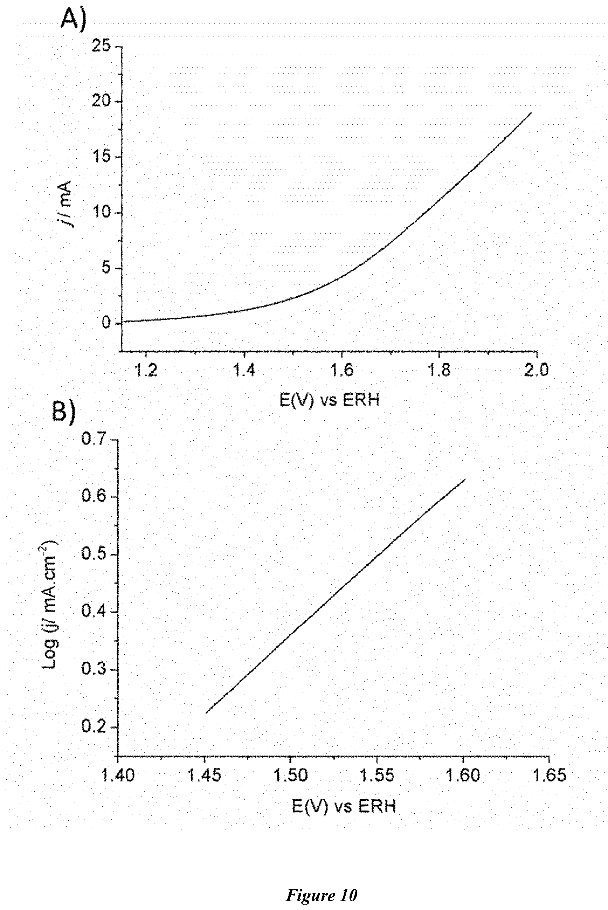

La voltamétrie à balayage linéaire entre 1,2V et 2,0V vs ERH (Electrode Réversible à Hydrogène) dans une solution aqueuse de KOH 1,0M avec une vitesse de balayage de 10 mV/s est présentée à la Figure 10A. Une densité de courant de 10 mA.cm⁻² a été obtenue à 540 mV de surtension pour la production de dioxygène. Le tracé de Tafel de l'électrode est présenté à la Figure 10B. L'activité catalytique augmente linéairement de 1,45V à 1,6V vs ERH. La pente de la droite de Tafel a été déterminée dans cette région égale à 121 mV.dec⁻¹.

### Exemple 8 : Préparation d'une électrode cuivre/oxyde de cuivre selon l'invention sur un support feutre carbone

1 cm² de feutre carbone fraîchement nettoyé est immergé dans 20 ml d'une solution de CuSO₄ à 0,2 M, 1,5 M de H₂SO₄ et un courant de 0,5 A est appliqué en utilisant une méthode galvanostatique pendant une durée de 80 s. L'électrode est ensuite retirée de la solution et nettoyée avec de grandes quantités d'eau distillée et séchée sous vide (10 mbar). L'électrode est ensuite transférée dans un four sous atmosphère d'air statique (1 bar). La température est élevée à 310 °C à une vitesse de 10 °C par minute, et la température est maintenue constante pendant 1 heure. Après cette étape, l'électrode est refroidie à température ambiante. Cette électrode est nommée électrode Cu/CuₓO_{y} (FC) par la suite.

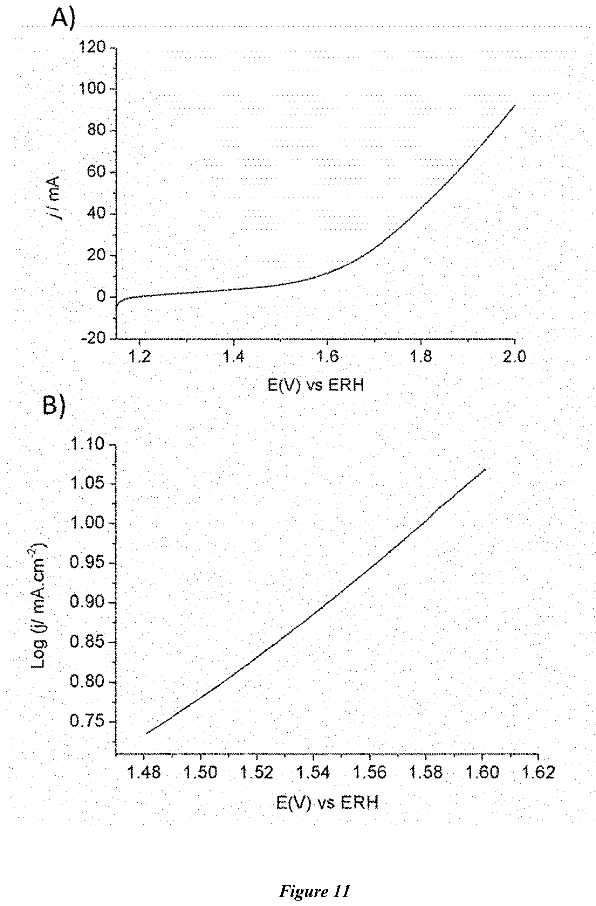

La voltamétrie à balayage linéaire entre 1,2V et 2,0V vs ERH (Electrode Réversible à Hydrogène) dans une solution aqueuse de KOH 1,0M avec une vitesse de balayage de 10 mV/s est présentée à la Figure 11A. Une densité de courant de 10 mA.cm⁻² a été obtenue à 350 mV de surtension pour la production de dioxygène. Le tracé de Tafel de l'électrode est présenté à la Figure 11B. L'activité catalytique augmente linéairement de 1,48V à 1,61V vs ERH. La pente de la droite de Tafel a été déterminée dans cette région égale à 84 mV.dec⁻¹.

### Exemple 9 : Préparation d'une électrode cuivre/oxyde de cuivre selon l'invention sur un support titane

1 cm² de plaque de titane fraîchement nettoyée est immergée dans 20 ml d'une solution de CuSO₄ à 0,2 M, 1,5 M de H₂SO₄ et un courant de 0,5 A est appliqué en utilisant une méthode galvanostatique pendant une durée de 80 s. L'électrode est ensuite retirée de la solution et nettoyée avec de grandes quantités d'eau distillée et séchée sous vide (10 mbar). L'électrode est ensuite transférée dans un four sous atmosphère d'air statique (1 bar). La température est élevée à 310 °C à une vitesse de 10 °C par minute, et la température est maintenue constante pendant 1 heure. Après cette étape, l'électrode est refroidie à température ambiante. Cette électrode est nommée électrode Cu/CuₓO_{y} (Ti) par la suite.

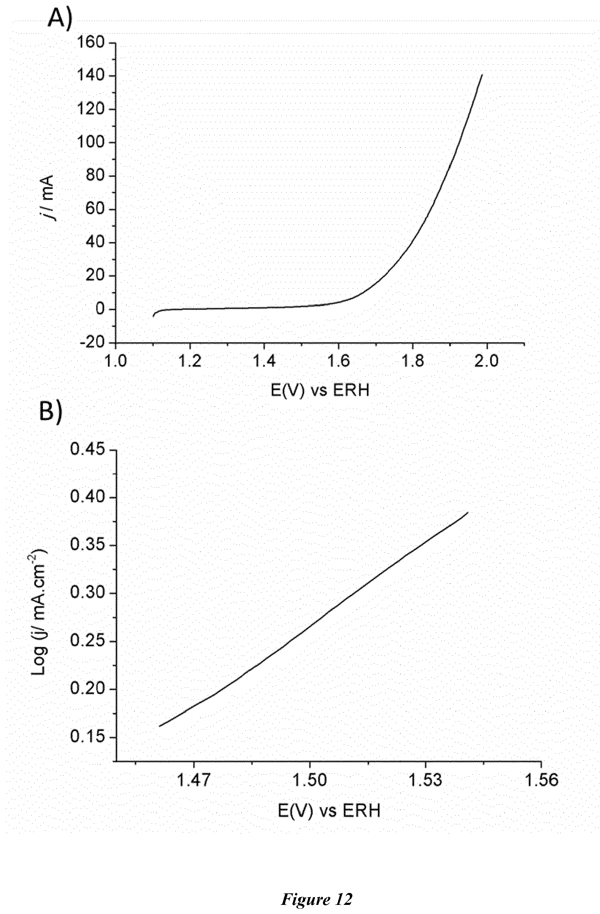

La voltamétrie à balayage linéaire entre 1,2V et 2,0V vs ERH (Electrode Réversible à Hydrogène) dans une solution aqueuse de KOH 1,0M avec une vitesse de balayage de 10 mV/s est présentée à la Figure 12A. Une densité de courant de 10 mA.cm⁻² a été obtenue à 410 mV de surtension pour la production de dioxygène. Le tracé de Tafel de l'électrode est présenté à la Figure 12B. L'activité catalytique augmente linéairement de 1,45V à 1,55V vs ERH. La pente de la droite de Tafel a été déterminée dans cette région égale à 89 mV.dec⁻¹.

### REFERENCES BILIOGRAPHIQUES

Du et al. Angew. Chem. 2015, 2073
Kanan et al. Science 2008, 1072
Liu et al. (a) J. Phys. Chem. C 2016, 831 ; (b) Electrochim. Acta 2016, 381
Nocera Acc. Chem. Res. 2012, 76

## Revendications

1. Electrode comprenant un support électro-conducteur dont au moins une partie de la surface est recouverte par un dépôt métallique de cuivre, la surface dudit dépôt étant sous une forme oxydée, sulfurée, sélénée et/ou tellurée et le dépôt ayant une surface spécifique supérieure ou égale à 1 m²/g,
l'électrode étant susceptible d'être obtenue par un procédé de préparation comprenant les étapes successives suivantes :
(i) électrodéposition de cuivre sur au moins une partie de la surface d'un support électro-conducteur afin de former un dépôt métallique dudit cuivre sur ladite au moins une partie de la surface du support électro-conducteur, et
(ii) oxydation, sulfuration, sélénation et/ou telluration de la surface du dépôt métallique,
dans lequel l'étape (i) est réalisée selon les étapes successives suivantes :
(a) immersion au moins partiellement du support électro-conducteur dans une solution aqueuse acide contenant des ions du cuivre à déposer, et
(b) application d'un courant entre le support électro-conducteur et une seconde électrode.

2. Electrode selon la revendication 1, **caractérisée en ce que** le support électro-conducteur est constitué, au moins en partie, par un matériau électro-conducteur choisi parmi un métal tel que le cuivre, l'acier, l'aluminium, le zinc ; un oxyde métallique tel que l'oxyde de titane dopé au fluor (FTO) ou l'oxyde d'étain dopé à l'indium (ITO) ; un sulfure métallique tel que le sulfure de cadmium ou le sulfure de zinc ; du carbone notamment sous forme de feutre de carbone, de graphite, de carbone vitreux, de diamant dopé au bore ; un semi-conducteur tel que du silicium ; et un mélange de ceux-ci.

3. Electrode selon l'une quelconque des revendications 1 et 2, **caractérisée en ce que** le dépôt métallique a une épaisseur comprise entre 10 µm et 2 mm, notamment comprise entre 50 µm et 0,5 mm, de préférence comprise entre 70 µm et 300 µm.

4. Electrode selon l'une quelconque des revendications 1 à 3, **caractérisée en ce que** le dépôt métallique a une surface spécifique comprise entre 1 m²/g et 500 m²/g, par exemple entre 1 m²/g et 200 m²/g, notamment comprise entre 2 m²/g et 100 m²/g, de préférence comprise entre 3 m²/g et 50 m²/g.

5. Electrode selon l'une quelconque des revendications 1 à 4, **caractérisée en ce que** le dépôt métallique a une structure poreuse avec une taille moyenne de pores comprise entre 10 µm et 500 µm, notamment entre 20 µm et 200 µm, de préférence entre 30 µm et 70 µm.

6. Electrode selon l'une quelconque des revendications 1 à 5, **caractérisée en ce que** la surface du dépôt métallique est sous une forme oxydée et/ou sulfurée, notamment sous une forme oxydée ou sulfurée.

7. Procédé de préparation d'une électrode selon l'une quelconque des revendications 1 à 6 comprenant les étapes successives suivantes :
(i) électrodéposition de cuivre sur au moins une partie de la surface d'un support électro-conducteur afin de former un dépôt métallique dudit cuivre sur ladite au moins une partie de la surface du support électro-conducteur, et
(ii) oxydation, sulfuration, sélénation et/ou telluration de la surface du dépôt métallique,
dans lequel l'étape (i) est réalisée selon les étapes successives suivantes :
(a) immersion au moins partiellement du support électro-conducteur dans une solution aqueuse acide contenant des ions du cuivre à déposer, et
(b) application d'un courant entre le support électro-conducteur et une seconde électrode.

8. Procédé selon la revendication 7, **caractérisé en ce que** la solution aqueuse acide contenant des ions du cuivre à déposer est une solution aqueuse acide contenant un sel hydrosoluble du cuivre à déposer, notamment choisi parmi CuSO₄, CuCl₂, Cu(ClO₄)₂, et un mélange de ceux-ci.

9. Procédé selon l'une quelconque des revendications 7 et 8, **caractérisé en ce que** le courant de l'étape (b) a une densité de courant comprise entre 0,1 mA/cm² et 5 A/cm², notamment comprise entre 0,1 mA/cm² et 1 mA/cm².

10. Procédé selon l'une quelconque des revendications 7 à 9, **caractérisé en ce que** l'étape (ii) comprend :
- une étape d'oxydation, sulfuration, sélénation et/ou telluration effectuée à une température comprise entre 30 et 700°C, notamment comprise entre 50 et 500°C, en particulier comprise entre 100 et 400°C, dans laquelle l'étape d'oxydation est effectuée dans une atmosphère contenant du dioxygène ou en présence de H₂O, l'étape de sulfuration est effectuée en présence de soufre élémentaire ou de H₂S, l'étape de sélénation est effectuée en présence de sélénium élémentaire ou de H₂Se, et l'étape de telluration est effectuée en présence de tellure élémentaire ou de H₂Te, et
- éventuellement une étape de recuit effectuée à une température comprise entre 50°C et 1000°C, en particulier comprise entre 100°C et 400°C, avantageusement durant un temps compris entre 10 min et 48 h, notamment compris entre 1 et 3 h.

11. Procédé selon l'une quelconque des revendications 7 à 10, **caractérisé en ce que** l'étape (ii) est suivie d'une étape (iii) réalisée selon les étapes successives suivantes :
(1) immersion au moins de la partie du support électro-conducteur recouvert d'un dépôt métallique dont la surface externe est oxydée, sulfurée, sélénée et/ou tellurée obtenu à l'étape (ii) dans une solution contenant des ions de cuivre et avantageusement de l'eau, et
(2) application d'un potentiel entre le support électro-conducteur et une seconde électrode, le potentiel électrique appliqué au support électro-conducteur étant négatif puis positif,
l'étape (iii) pouvant être réitérée une ou plusieurs fois.

12. Dispositif électrochimique comprenant une électrode selon l'une quelconque des revendications 1 à 6.

13. Dispositif électrochimique selon la revendication 12, **caractérisé en ce qu'**il s'agit d'un dispositif d'électrolyse ou d'une pile à combustible.

14. Procédé d'oxydation de l'eau en dioxygène comprenant l'application d'un courant électrique entre une anode et une cathode, l'anode étant une électrode selon l'une quelconque des revendications 1 à 6 immergée dans l'eau ou dans un fluide contenant de l'eau, avantageusement à pH basique.

## Patentansprüche

1. Elektrode, umfassend einen elektrisch leitenden Träger, bei dem mindestens ein Teil der Oberfläche mit einer Kupfermetallabscheidung bedeckt ist, wobei die Oberfläche der Abscheidung in oxidierter, sulfidierter, selensierter und/oder tellurierter Form vorliegt und die Abscheidung eine spezifische Oberfläche von über oder gleich 1 m²/g aufweist,
wobei die Elektrode durch ein Herstellungsverfahren erhältlich ist, das die folgenden aufeinanderfolgenden Schritte umfasst:
(i) Elektroabscheidung von Kupfer auf mindestens einem Teil der Oberfläche eines elektrisch leitenden Trägers, um eine Metallabscheidung des Kupfers auf dem mindestens einen Teil der Oberfläche des elektrisch leitenden Trägers zu bilden, und
(ii) Oxidation, Sulfidierung, Selenisierung und/oder Tellurierung der Oberfläche der Metallabscheidung,
wobei Schritt (i) in den folgenden aufeinanderfolgenden Schritten durchgeführt wird:
(a) zumindest teilweises Eintauchen des elektrisch leitenden Trägers in eine saure wässrige Lösung, die Ionen des abzuscheidenden Kupfers enthält, und
(b) Anlegen eines Stroms zwischen dem elektrisch leitenden Träger und einer zweiten Elektrode.

2. Elektrode nach Anspruch 1, **dadurch gekennzeichnet, dass** der elektrisch leitende Träger zumindest teilweise aus einem elektrisch leitenden Material besteht, das aus einem Metall wie Kupfer, Stahl, Aluminium, Zink; einem Metalloxid wie fluordotiertes Titanoxid (FTO) oder indiumdotiertes Zinnoxid (ITO); einem Metallsulfid wie Cadmiumsulfid oder Zinksulfid; Kohlenstoff, insbesondere in Form von Kohlenstofffilz, Graphit, glasartigem Kohlenstoff, bordotiertem Diamant; einem Halbleiter wie Silizium; und einer Mischung davon ausgewählt ist.

3. Elektrode nach einem der Ansprüche 1 und 2, **dadurch gekennzeichnet, dass** die Metallabscheidung eine Dicke zwischen 10 µm und 2 mm, insbesondere zwischen 50 µm und 0,5 mm, vorzugsweise zwischen 70 µm und 300 um, hat.

4. Elektrode nach einem der Ansprüche 1 bis 3, **dadurch gekennzeichnet, dass** die Metallabscheidung eine spezifische Oberfläche zwischen 1 m²/g und 500 m²/g, beispielsweise zwischen 1 m²/g und 200 m²/g, insbesondere zwischen 2 m²/g und 100 m²/g, vorzugsweise zwischen 3 m²/g und 50 m²/g, hat.

5. Elektrode nach einem der Ansprüche 1 bis 4, **dadurch gekennzeichnet, dass** die Metallabscheidung eine poröse Struktur mit einer mittleren Porengröße zwischen 10 µm und 500 um, insbesondere zwischen 20 µm und 200 um, vorzugsweise zwischen 30 µm und 70 um, hat.

6. Elektrode nach einem der Ansprüche 1 bis 5, **dadurch gekennzeichnet, dass** die Oberfläche der Metallabscheidung in einer oxidierten und/oder sulfurierten Form, insbesondere in einer oxidierten oder sulfurierten Form, vorliegt.

7. Verfahren zur Herstellung einer Elektrode nach einem der Ansprüche 1 bis 6, das die folgenden aufeinanderfolgenden Schritte umfasst:
(i) Elektroabscheidung von Kupfer auf mindestens einem Teil der Oberfläche eines elektrisch leitenden Trägers, um eine Metallabscheidung des Kupfers auf dem mindestens einen Teil der Oberfläche des elektrisch leitenden Trägers zu bilden, und
(ii) Oxidation, Sulfidierung, Selenisierung und/oder Tellurierung der Oberfläche der Metallabscheidung,
wobei Schritt (i) in den folgenden aufeinanderfolgenden Schritten durchgeführt wird:
(c) zumindest teilweises Eintauchen des elektrisch leitenden Trägers in eine saure wässrige Lösung, die Ionen des abzuscheidenden Kupfers enthält, und
(d) Anlegen eines Stroms zwischen dem elektrisch leitenden Träger und einer zweiten Elektrode.

8. Verfahren nach Anspruch 7, **dadurch gekennzeichnet, dass** die saure wässrige Lösung, die Ionen des abzuscheidenden Kupfers enthält, eine saure wässrige Lösung ist, die ein wasserlösliches Salz des abzuscheidenden Kupfers enthält, das insbesondere aus CuSO₄, CuCl₂, Cu (ClO₄)₂ und einer Mischung davon ausgewählt ist.

9. Verfahren nach einem der Ansprüche 7 und 8, **dadurch gekennzeichnet, dass** der Strom von Schritt (b) eine Stromdichte zwischen 0,1 mA/cm² und 5 A/cm², insbesondere zwischen 0,1 mA/cm² und 1 mA/cm², hat.

10. Verfahren nach einem der Ansprüche 7 bis 9, **dadurch gekennzeichnet, dass** Schritt (ii) umfasst:
- einen Oxidations-, Sulfurierungs-, Selenierungs- und/oder Tellurierungsschritt, der bei einer Temperatur zwischen 30 und 700°C, insbesondere zwischen 50 und 500°C, vor allem zwischen 100 und 400°C durchgeführt wird, wobei der Oxidationsschritt in einer Sauerstoff enthaltenden Atmosphäre oder in Gegenwart von H₂O durchgeführt wird, der Sulfurierungsschritt in Gegenwart von elementarem Schwefel oder von H₂S durchgeführt wird, der Selenierungsschritt in Gegenwart von elementarem Selen oder von H₂Se durchgeführt wird, und der Tellurierungsschritt in Gegenwart von elementarem Tellur oder von H₂Te durchgeführt wird, und
- gegebenenfalls einen Glühschritt, der bei einer Temperatur zwischen 50°C und 1000°C, vor allem zwischen 100°C und 400°C, in vorteilhafter Weise während einer Zeit zwischen 10 Min und 48 Std., insbesondere zwischen 1 und 3 Std., durchgeführt wird.

11. Verfahren nach einem der Ansprüche 7 bis 10, **dadurch gekennzeichnet, dass** auf Schritt (ii) ein Schritt (iii) folgt, der gemäß den folgenden aufeinanderfolgenden Schritten durchgeführt wird:
(1) Eintauchen mindestens des Teils des elektrisch leitenden Trägers, der mit einer Metallabscheidung bedeckt ist, deren äußere Oberfläche oxidiert, sulfidiert, selenisiert und/oder telluriert ist, die in Schritt (ii) erhalten wurde, in eine Lösung, die Kupferionen und in vorteilhafterweise Wasser enthält, und
(2) Anlegen eines Potentials zwischen dem elektrisch leitenden Träger und einer zweiten Elektrode, wobei das an den elektrisch leitenden Träger angelegte elektrische Potential zunächst negativ und dann positiv ist,
wobei Schritt (iii) ein- oder mehrmals wiederholt werden kann.

12. Elektrochemische Vorrichtung, die eine Elektrode nach einem der Ansprüche 1 bis 6 umfasst.

13. Elektrochemische Vorrichtung nach Anspruch 12, **dadurch gekennzeichnet, dass** es sich um eine Elektrolysevorrichtung oder eine Brennstoffzelle handelt.

14. Verfahren zur Oxidation von Wasser zu Sauerstoff, umfassend das Anlegen eines elektrischen Stroms zwischen einer Anode und einer Kathode, wobei die Anode eine Elektrode nach einem der Ansprüche 1 bis 6 ist, die in Wasser oder in ein wasserhaltiges Fluid eingetaucht ist, vorteilhafterweise mit einem basischen pH-Wert.

## Claims

1. An electrode comprising an electrically conductive substrate of which at least one part of the surface is covered with a copper metal deposit, the surface of said deposit being in an oxidised, sulphurised, selenised and/or tellurised form and the deposit having a specific surface area greater than or equal to 1m²/g,
the electrode being obtainable by a preparation process comprising the following successive steps:
(i) electrodeposition of copper on at least one part of the surface of an electrically conductive support in order to form a metallic deposit of said copper on said at least one part of the surface of the electrically conductive substrate, and
(ii) oxidation, sulphurisation, selenisation and/or tellurisation of the surface of the metal deposit,
wherein step (i) is carried out according to the following successive steps:
(a) at least partial immersion of the electrically conductive substrate in an acidic aqueous solution containing ions of the copper to be deposited, and
(b) application of a current between the electrically conductive substrate and a second electrode.

2. The electrode according to claim 1, **characterised in that** the electrically conductive substrate consists, at least in part, of an electrically conductive material selected from a metal such as copper, steel, aluminium, zinc; a metal oxide such as fluorine-doped titanium oxide (FTO) or indium-doped tin oxide (ITO); a metal sulphide such as cadmium sulphide or zinc sulphide; carbon, particularly in the form of carbon felt, graphite, vitreous carbon, boron-doped diamond; a semiconductor such as silicon; and a mixture thereof.

3. The electrode according to any one of claims 1 and 2, **characterised in that** the metal deposit has a thickness comprised between 10 µm and 2 mm, in particular between 50 µm and 0.5 mm, preferably between 70 µm and 300 µm.

4. The electrode according to any one of claims 1 to 3, **characterised in that** the metal deposit has a specific surface area comprised between 1 m²/g and 500 m²/g, for example between 1 m²/g and 200 m²/g, in particular between 2 m²/g and 100 m²/g, preferably between 3 m²/g and 50 m²/g.

5. The electrode according to any one of claims 1 to 4, **characterised in that** the metal deposit has a porous structure with an average pore size comprised between 10 µm and 500 µm, in particular between 20 µm and 200 µm, preferably between 30 µm and 70 µm.

6. The electrode according to any one of claims 1 to 5, **characterised in that** the surface of the metal deposit is in an oxidised and/or sulphurised form, in particular in an oxidised or sulphurised form.

7. A process for preparing an electrode according to any one of claims 1 to 6 comprising the following successive steps:
i) electrodeposition of copper on at least one part of the surface of an electrically conductive substrate so as to form a metal deposit of said copper on said at least one part of the surface of the electrically conductive support, and
(ii) oxidation, sulphurisation, selenisation and/or tellurisation of the surface of the metal deposit,
wherein step (i) is carried out according to the following successive steps:
(a) at least partial immersion of the electrically conductive substrate in an acidic aqueous solution containing ions of the copper to be deposited, and
(b) application of a current between the electrically conductive substrate and a second electrode.

8. The process according to claim 7, **characterised in that** the acidic aqueous solution containing ions of the copper to be deposited is an acidic aqueous solution containing a water-soluble salt of the copper to be deposited, in particular selected from CuSO₄, CuCl₂, Cu(ClO₄)₂, and a mixture thereof.

9. The process according to any one of claims 7 and 8, **characterised in that** the current in step (b) has a current density comprised between 0.1 mA/cm² and 5 A/cm², in particular between 0.1 mA/cm² and 1 mA/cm².

10. The process according to any one of claims 7 to 9, **characterised in that** step (ii) comprises :
- an oxidation, sulphurisation, selenisation and/or tellurisation step carried out at a temperature comprised between 30 and 700°C, in particular between 50 and 500°C, in particular between 100 and 400°C, in which the oxidation step is carried out in an atmosphere containing dioxygen or in the presence of HzO, the sulphurisation step is carried out in the presence of elemental sulphur or H₂S, the selenisation step is carried out in the presence of elemental selenium or H₂Se, and the tellurisation step is carried out in the presence of elemental tellurium or H₂Te, and
- optionally, an annealing step carried out at a temperature comprised between 50°C and 1000°C, in particular between 100°C and 400°C, advantageously for a time comprised between 10 min and 48 h, in particular between 1 and 3 h.

11. The process according to any one of claims 7 to 10, **characterised in that** step (ii) is followed by a step (iii) carried out according to the following successive steps:
(1) immersing at least the part of the electrically conductive substrate covered with a metal deposit the outer surface of which is oxidised, sulphurised, selenised and/or tellurised obtained in step (ii) in a solution containing copper ions and advantageously water, and
(2) application of a potential between the electrically conductive substrate and a second electrode, the electrical potential applied to the electrically conductive support being negative and then positive,
wherein step (iii) may be repeated one or more times.

12. An electrochemical device comprising an electrode according to any one of claims 1 to 6.

13. The electrochemical device according to claim 12, **characterised in that** it is an electrolysis device or a fuel cell.

14. A process for oxidising water to dioxygen comprising the application of an electric current between an anode and a cathode, the anode being an electrode according to any one of claims 1 to 6 immersed in water or in a fluid containing water, advantageously at basic pH.
